Europäisches Patentamt

European Patent Office

Office européen des brevets

(11) Numéro de publication : **0 461 037 A1**

# (12) DEMANDE DE BREVET EUROPEEN

(21) Numéro de dépôt : **91401477.4**

(22) Date de dépôt : **06.06.91**

(51) Int. Cl.⁵ : **B62D 6/00**, B62D 101/00, B62D 117/00, B62D 5/04

(30) Priorité : **08.06.90 FR 9007130**

(43) Date de publication de la demande :
**11.12.91 Bulletin 91/50**

(84) Etats contractants désignés :
**DE ES GB IT NL SE**

(71) Demandeur : **VALEO ELECTRONIQUE**
**12-14, Rue Jean Bart**
**F-78960 Voisins-Le-Bretonneux (FR)**

(72) Inventeur : **Desrus, Dany**
**28, rue du Colonel Rozanoff**
**F-75012 Paris (FR)**

(74) Mandataire : **Gamonal, Didier et al**
**Société VALEO Service Propriété Industrielle**
**30, rue Blanqui**
**F-93406 Saint Ouen (FR)**

(54) **Dispositif de commande d'un dispositif d'assistance de direction pour véhicule.**

(57) Dans un dispositif de commande (22) d'un dispositif d'assistance de direction, l'assistance peut être activée ou désactivée par au moins un signal de commande.
Le dispositif de commande comporte :
un moyen de mesure (17, 26) d'au moins un paramètre d'activation du dispositif d'assistance et un moyen de mesure (17, 27) d'au moins un paramètre de désactivation du dispositif d'assistance (respectivement vitesse et accélération de rotation du volant)
un moyen (29) pour réaliser un premier test pour détecter qu'au moins un paramètre d'activation remplit une condition d'activation, un moyen d'activation (32) de l'assistance (19) en réponse au premier test,
un moyen (28) pour réaliser un second test pour détecter qu'au moins un paramètre de désactivation remplit une condition de désactivation, et un moyen de désactivation (33) de l'assistance en réponse au second test.

EP 0 461 037 A1

FIG.3

L'invention concerne un dispositif de commande d'un dispositif d'assistance de direction pour un véhicule automobile.

Dans l'art antérieur on a déjà proposé des systèmes permettant d'asservir ou d'assister la rotation des roues directrices en réponse à un effort du conducteur sur le volant monté sur la colonne de direction.

Jusqu'à présent, on a le plus souvent asservi l'assistance à la détection du couple exercé par le conducteur sur la colonne de direction.

En particulier, on a proposé des montages permettant de mesurer le couple exercé.

De tels dispositifs entraînent ou bien que la colonne de direction comporte deux arbres, ou bien que la colonne de direction comporte en un point un axe de torsion, la différence d'angles de rotation entre les deux parties de la colonne de direction étant une mesure du couple exercé.

De tels dispositifs augmentent considérablement le prix des directions assistées et écartent l'adaptation de ces solutions sur des véhicules bas de gamme.

D'autre part, la mesure du couple sur le volant est, dans plusieurs situations de conduite, un paramètre surabondant.

La présente invention apporte remède à ces inconvénients de l'art antérieur, en particulier en proposant un dispositif de commande d'un dispositif d'assistance de direction, pour au moins une paire de roues de véhicule, l'assistance pouvant être activée ou désactivée par un premier signal de commande, caractérisé en ce que le dispositif de commande comporte :

– un moyen de mesure d'au moins un paramètre d'activation du dispositif d'assistance et un moyen de mesure d'au moins un paramètre de désactivation du dispositif d'assistance,
– un moyen pour réaliser un premier test pour détecter qu'au moins un paramètre d'activation rempli une condition d'activation,
– un moyen d'activation de l'assistance en réponse au premier test,
– un moyen pour réaliser un second test pour détecter qu'au moins un paramètre de désactivation rempli une condition de désactivation, et
– un moyen de désactivation de l'assistance en réponse au second test.

D'autres caractéristiques et avantages de la présente invention seront mieux compris à l'aide de la description et des figures annexées qui sont :

– la figure 1 : un organigramme d'une stratégie de pilotage d'un dispositif de commande de l'invention,
– la figure 2 : trois chronogrammes d'un mode de réalisation d'une assistance selon la stratégie de la figure 1,
– la figure 3 : le schéma général d'un véhicule équipé d'un dispositif selon un mode de réalisation de la présente invention,
– la figure 4 : un schéma de l'un des moyens du dispositif de la figure 3,
– la figure 5 : un chronogramme du fonctionnement du moyen de la figure 4.

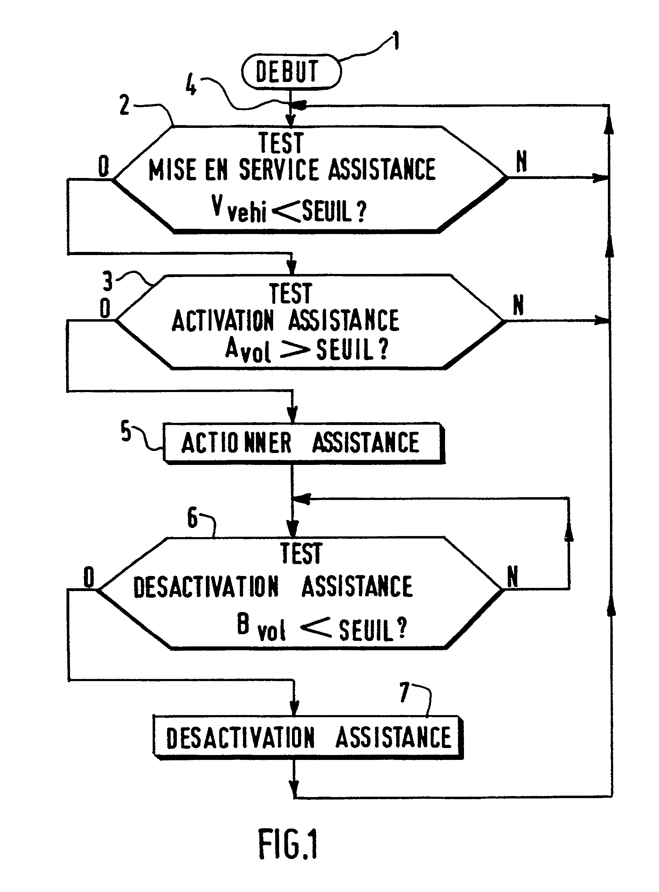

A la figure 1, on a représenté un organigramme exposant la stratégie de pilotage du dispositif de commande selon l'invention, dans un mode de réalisation préféré.

L'organigramme commence par une phase d'initialisation pendant laquelle le véhicule est dans un état quelconque : en marche ou à l'arrêt. Les roues directrices sont les roues avant.

Dans une étape de test préliminaire 2, on teste une condition de mise en service de l'assistance. Cette étape permet en particulier d'exploiter le dispositif d'assistance de la direction des roues avant dans plusieurs circonstances prédéterminées.

Dans un exemple de réalisation préféré, cette condition de mise en service, est réalisée quand le dispositif de l'invention a déterminé que le conducteur du véhicule l'a placé en mode parking.

Dans un mode de réalisation de l'invention, le test de cette condition de mise en service est réalisé en mesurant la vitesse du véhicule et en détectant que cette vitesse est inférieure à un seuil.

Dans un exemple de réalisation préféré, le seuil de la vitesse du véhicule est fixé à 10 km/heure.

Tant que le test n'est pas positif, on retourne au point 4 d'attente.

Le dispositif de l'invention surveille en continu cette condition.

Dès que la condition précitée est atteinte, on passe à un premier test 3 dans lequel on teste une condition d'activation du dispositif d'assistance selon laquelle la vitesse de rotation du volant dépasse un premier seuil prédéterminé.

Tant que cette condition n'est pas réalisée, on retourne au point 4 de mise en attente. Si la condition 3 est atteinte, le dispositif de commande de l'invention actionne le dispositif d'assistance dans une étape 5.

Puis, à l'étape 6, on exécute un second test destiné à désactiver le dispositif d'assistance. Dans le mode de réalisation préféré, la désactivation a lieu si la vitesse de rotation du volant décroît plus vite qu'un seuil prédéterminé.

Quand cette condition est atteinte, le dispositif de commande détecte que le conducteur a exercé un effort réclamant la fin de l'assistance, et dans une étape 7 on réalise une opération de désactivation du dispositif d'assitance.

A l'issue de cette étape 7, on retourne à la mise en état de veille au point 4 de l'organigramme.

En particulier, ce retour à l'état de veille peut parvenir dès que le conducteur a exercé un effort en sens inverse sur le volant pour redresser les roues.

Dans cette situation, l'assistance est désactivée.

Si le conducteur poursuit son effort, le dispositif de commande doit être réactivé. On retourne à l'étape 2 et, tant que la vitesse de rotation du volant n'excède pas le seuil A, l'assistance n'est pas activée.

Si cette condition est dépassée, l'assistance est activée et on retourne dans la situation précédente, mais la rotation des roues directrices étant dans le sens inverse.

Par contre, quand le conducteur cesse d'exercer une action sur le volant, la vitesse de rotation du volant subit une décroissance plus forte qu'une valeur prédéterminée et le dispositif d'assistance est désactivé.

Si, dans une autre situation, la condition de mise en service du mode assistance n'est plus vérifiée, on entre dans une phase de pilotage non assisté. Dans un mode de réalisation, la condition de mise en oeuvre est prioritaire sur les conditions d'activation ou de désactivation. De ce fait, dès que la condition de mise en service n'est plus vérifiée, le dispositif d'assistance n'est plus en service. Dans un autre mode de réalisation, la condition de mise en service n'est testée que si le dispositif a été antérieurement désactivé.

Cette stratégie a été appliquée avec succès à d'autres situations que celle du parking, décrite ci-dessus.

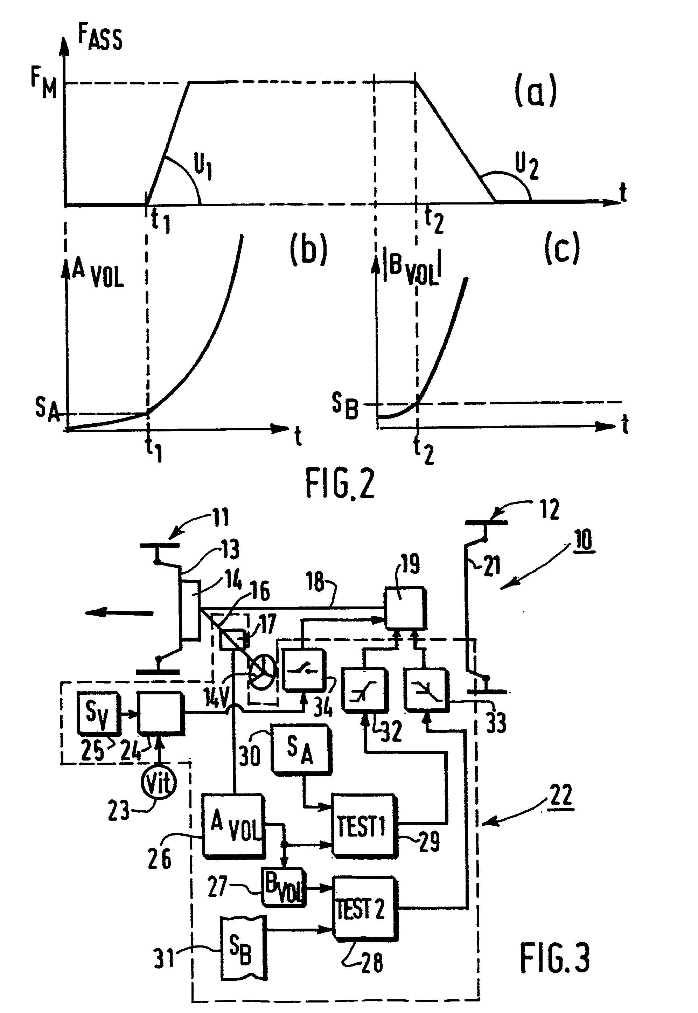

A la figure 2, on a représenté le fonctionnement de l'assistance pilotée selon la stratégie de la figure 1. La courbe a est un chronogramme de la puissance motrice du moteur fournissant l'effort d'assistance Fass.

Le dispositif d'assistance prévu dans un mode préféré de réalisation de l'invention est un système fournissant une énergie mécanique d'assistance selon deux rampes U1, U2 de montée d'assistance et de descente d'assistance, et un palier constant d'assistance.

L'effort d'assistance est représenté en ordonnée au cours du temps représenté en abscisse.

Sur la courbe a, le dispositif d'assistance est activé à l'instant $t_1$.

La courbe b représente en ordonnée la vitesse de rotation du volant $A_{vol}$ et le seuil $S_A$ d'activation du dispositif d'assistance.

Le dispositif est donc activé selon une rampe de pente U1 jusqu'à atteindre la valeur maximum $F_M$ du couple d'assistance.

La vitesse de rotation du volant évolue en fonction des efforts du conducteur. Puis, au bout d'un certain temps, sur la courbe représentée c, dans laquelle les ordonnées représentent la vitesse de variation de la vitesse de rotation du volant ou $B_{vol}$, on remarque que cette accélération de l'angle de rotation dépasse un seuil $S_B$.

De ce fait, le dispositif d'assistance est désactivé par l'exécution d'une rampe de décroissance de pente U2 sur la puissance motrice Fn jusqu'à la cessation de l'assistance au bout d'un temps prédéterminé.

Les rampes U1 et U2 d'activation et de désactivation sont produites selon des lois préenregistrées. Dans un mode de réalisation, ces rampes sont obtenues par le contrôle instantané du couple du moteur électrique du dispositif d'assistance. De même, la stratégie est appliquée dans les deux sens de rotation du volant, le dispositif d'assistance inversant dans un cas ou dans l'autre le sens d'application du couple d'assistance.

A la figure 3 on a représenté un véhicule automobile 10 muni d'un dispositif de commande 22 selon un mode de réalisation préféré de l'invention.

Le véhicule 10 comporte un train de roues avant 11 directrices et un train de roues arrière 12 motrices.

Les roues avant directrices 11 sont reliées par une barre de direction 13, et par une crémaillère 14 à la colonne de direction 16.

La colonne de direction 16 peut être tournée par l'action d'un volant 14V manipulé par le conducteur.

D'autre part, le dispositif de commande 22 comporte un capteur de l'angle de rotation du volant 17, dit angle volant. Ce capteur est monté sur la colonne de direction 16. Comme ce capteur ne mesure que la vitesse de rotation du volant, il suffit d'un capteur incrémental muni d'un détecteur du sens de rotation de l'invention.

On remarque que le capteur des paramètres d'activation est le plus simple possible. Cette caractéristique de l'invention est à comparer aux réalisations de l'art antérieur qui conduisent à utiliser un capteur de couple volant. De tels capteurs de couple sont coûteux et contraignent à réaliser la colonne de direction en deux parties séparées ou reliées par un arbre de torsion étalon.

Le mouvement de la colonne de direction 16 déclenche l'assistance dans les conditions de l'invention, un moteur d'assistance étant embrayé sur un axe 18, connecté à la crémaillère ou à la colonne de direction.

La rotation de l'axe 18 est fournie par le dispositif d'assistance 19 qui comporte une entrée d'activation et une entrée de désactivation.

Un tel dispositif, ainsi qu'il est connu de l'art antérieur, comporte principalement un moteur destiné à fournir l'effort F d'asservissement. Il comporte dans un mode préféré de réalisation :

- un moyen 34 qui reçoit le signal de mise en service et met en service le dispositif d'assistance 19, ce moyen 34 étant constitué par un embrayage, piloté par les signaux de commande de l'invention c'est-à-dire par les entrées d'activation et de désactivation du dispositif d'assistance,
- un générateur de rampes U1,U2 comportant un générateur de rampe montante 32 et un générateur de rampe descendante 33, qui excitent selon les lois U1 et U2 le moteur du dispositif 19.

Le dispositif 22 comporte aussi un capteur 23 de la vitesse du véhicule, qui sert de moyen pour déterminer qu'une condition de mise en service du dispositif de commande est atteinte.

Le signal issu du capteur est fourni à la première entrée d'un moyen pour exécuter un test 24 comme un comparateur, dont une seconde entrée reçoit une valeur de consigne fournie par un circuit de référence 25 destinée à déclencher en sortie un signal de mise en service du dispositif de commande. Dans un mode de réalisation préféré, ce signal de mise en service est transmis à une entrée de commande du moyen 34. Grâce à un tel moyen de test, le mécanisme d'embrayage et de débrayage du dispositif d'assistance place le moteur d'assistance en prise avec un engrenage ou tout autre moyen de couplage avec l'arbre de sortie du dispositif d'assistance. Grâce à un tel moyen d'embrayage, l'inertie du dispositif d'assistance ne gêne pas le conducteur quand le dispositif de commande n'est pas en service. En effet, le moteur d'assistance est alors débrayé et son inertie n'est pas ajoutée aux autres charges sur l'arbre 16 de direction.

D'autre part, le dispositif de commande 22 comporte un moyen de calcul 26 de la vitesse de l'angle volant dont une entrée reçoit le signal de sortie du capteur 17.

La sortie du moyen de calcul 26 est fournie d'une part à un premier moyen de test 29 et à un moyen 27 de calcul de l'accélération de l'angle volant.

Le moyen de test 29 est activé seulement après la mise en service du dispositif d'assistance de façon à ne fournir une assistance que si l'ensemble des moyens de l'invention fonctionne. Dans le cas contraire, le véhicule reste en fonctionnement de direction non assistée.

La sortie du moyen de test 29 est fournie à l'entrée d'activation du dispositif d'assistance 19.

Le moyen de test 29 reçoit sur une autre entrée une valeur de seuil SA engendrée par un moyen 30 pour engendrer un seuil SA.

Quand le test est positif, le dispositif 19 est activé par le signal de sortie 32 du moyen 29 de test.

D'autre part, le moyen 27 de calcul de l'accélération de l'angle volant fournit une sortie qui est transmise à la première entrée d'un second moyen de test 28 dont une seconde entrée reçoit une valeur de seuil SB. Quand le second moyen de test 28 fournit une réponse positive du fait que la valeur instantanée de l'accélération $B_{VOL}$ de l'angle volant dépasse le seuil, l'entrée 33 de désactivation du dispositif 19 reçoit une commande demandant que soit exécutée la rampe de désactivation du dispositif d'assistance. Le seuil SB est généré par un moyen 31. Un tel moyen peut être réalisé par un générateur de tension de référence si le moyen de test est un comparateur analogique, ou par une adresse d'une mémoire chargée par une constante représentative du seuil si le moyen de test est constitué par un microprocesseur.

De ce fait, on constate que le dispositif de commande selon l'invention permet, selon une ou plusieurs lois d'assistance, convenablement sélectionnées, enregistrées dans le dispositif d'assistance 20, de réaliser par le dispositif 19 une assistance sélective de la direction du véhicule.

Dans un mode de réalisation préféré le moyen de calcul est constitué par un compteur d'impulsions dont une entrée reçoit un signal impulsionnel à une première fréquence qui permet de compter le nombre d'instants élémentaires entre deux signaux incrémentaux élaborés par le capteur d'angle 17. La valeur de comptage est enregistrée à la réception de chaque impulsion du capteur 17 dans une adresse mémoire. La valeur mémorisée est une mesure de la vitesse instantanée de rotation du volant. De plus, les variations de cette valeur pendant des durées déterminées sont indicatives de l'accélération de l'angle volant.

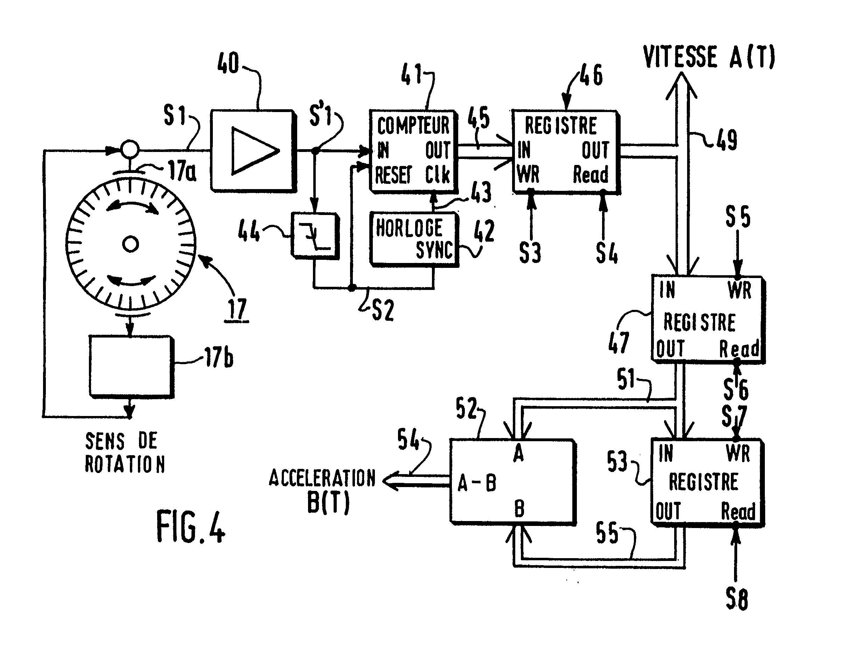

A la figure 4 on a représenté un mode de réalisation préféré d'un dispositif destiné à engendrer les paramètres d'activation $A_{VOL}$ et de désactivation $B_{VOL}$.

A la figure 4, le capteur d'angle volant 17 est constitué par exemple par un disque solidaire de la colonne de direction 16 et qui dispose d'un premier moyen destiné à engendrer des impulsions dont la position temporelle est une indication de la vitesse de rotation de la colonne de direction. Le capteur 17 comporte d'autre part un second moyen 17b destiné à engendrer un signal représentatif du sens de rotation.

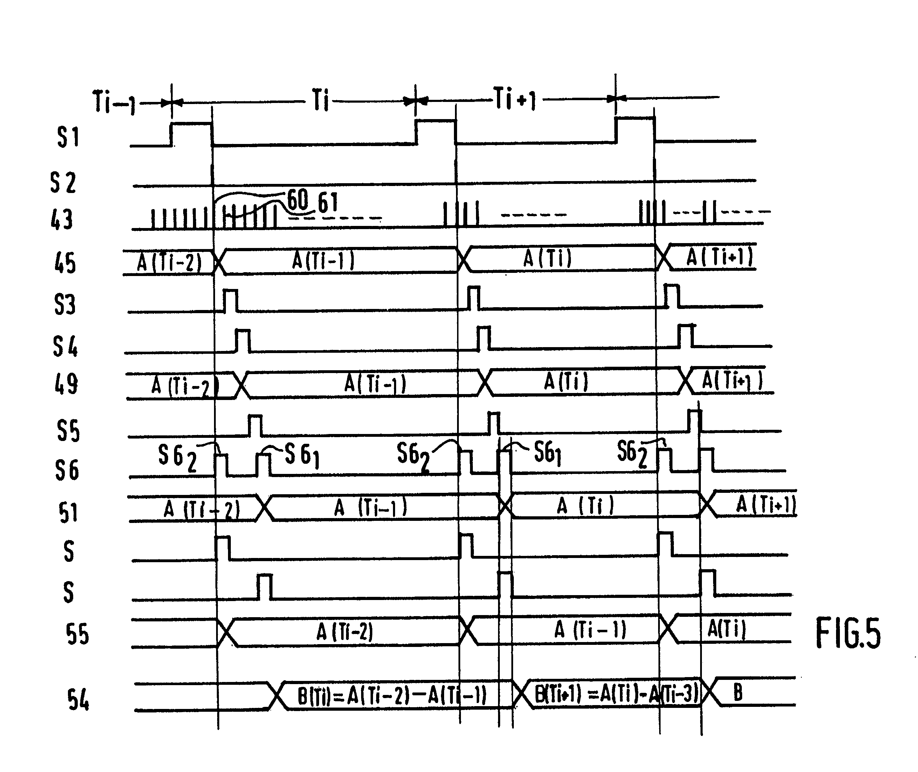

Les moyens de détection liés au capteur 17, qui comprennent un codeur incrémental, émettent un premier signal S1 contenant l'information du sens de rotation du volant et constitué par un train d'impulsions qui sont créées par exemple à chaque fois qu'une encoche pratiquée sur le disque du capteur 17 passe devant une source lumineuse. Il est bien entendu que l'invention ne se limite pas à un capteur incrémental de type optique mais peut s'appliquer notamment à des capteurs magnétiques ou autres. Le signal S1 est transmis à l'entrée d'un circuit 40 destiné à le mettre en forme et dont la sortie S'1 est sous la forme d'une suite d'impulsions constituée par des créneaux carrés représentés sur le chronogramme de la figure 5 à la première ligne S1.

L'intervalle de temps séparant les fronts montants de deux créneaux est désigné par la succession de périodes ou durées Ti-1, Ti, Ti+1.

Ces périodes Ti-1, Ti, Ti+1 ne sont à priori pas constantes, mais leur durée dépend de la vitesse de rotation du volant. De ce fait, la mesure de chacune de ces durées est une mesure de la vitesse de rotation de l'angle volant.

Le dispositif de la figure 4 comporte un moyen pour élaborer de manière simple le signal mesurant le paramètre d'activation constitué par la vitesse de l'angle volant. D'autre part, le dispositif de la figure 4 comporte aussi un moyen destiné à réaliser une mesure du paramètre de désactivation constitué par la variation de la vitesse de l'angle volant, c'est-à-dire son accélération.

A la figure 4, le signal S'1 constitué par des créneaux carrés, est fourni d'une part à l'entrée d'un premier circuit 42 et à l'entrée d'un second circuit 41. Le circuit 41 est constitué par un détecteur de front descendant qui émet une impulsion d'une durée prédéterminée à sa sortie dès qu'il reçoit un front descendant d'un signal appliqué sur son entrée.

Le circuit 41 est un compteur d'impulsions dont l'entrée IN reçoit les signaux carrés S'1. Quand le signal S'1 ou S1 passe au niveau 1, le compteur commence à partir d'une valeur initiale à compter le nombre d'impulsions d'horloge 43 reçues sur son entrée Clk activée par la sortie d'une horloge 42. L'horloge 42 est une horloge qui fonctionne à une fréquence notablement supérieure à la fréquence maximale du signal S1. Le rapport de fréquence de ces deux signaux permet d'estimer la résolution de la chaîne de mesure.

La valeur initiale de comptage est fixée par l'entrée de ré-initialisation (Reset) du compteur 41 qui est connecté à la sortie du circuit 44 de détection du front descendant 52. De ce fait, le comptage démarre au début de chaque période Ti-1, Ti, Ti+1, quand le signal S1 au niveau O.

D'autre part, le signal S2 de sortie du circuit 44 de détection de front descendant est fourni à une entrée de synchronisation de l'horloge 42. On se reporte à la figure 5, au début de la période référencée Ti.

La sortie du compteur 41 fourni un mot binaire 45 dont la valeur lors du comptage s'incrémente d'une unité à chaque impulsion 60,61 de l'horloge 42. Cette valeur est présentée à l'entrée IN d'un registre 46. Le registre 46 comporte une entrée de commande d'écriture notée WR qui reçoit un signal S3 destiné à transférer le contenu du mot binaire présenté à l'entrée IN à l'intérieur du registre.

D'autre part, le registre 46 reçoit sur une autre entrée de commande de lecture notée Read un signal S4 destiné à valider la lecture du mot enregistré dans le registre 46 sur sa sortie notée OUT. Quand le signal S3 passe au niveau "O", la valeur de comptage est mémorisée dans le registre 46. Quand le signal S4 passe au niveau "O" le contenu mémorisé dans le registre 46, dont la valeur est représentative de la vitesse de l'angle volant A(Ti=1) lors de la période Ti-1 d'analyse précédente est transmise à sa sortie 49 pour exploitation par le circuit de l'invention comme il a été vu à la figure 3.

Dans le mode de réalisation de la figure 4, le circuit comporte aussi un moyen pour engendrer le paramètre de désactivation du dispositif d'assistance.

La sortie 49 du registre 46 est aussi fournie à l'entrée IN d'un registre 47 identique au registre 46. La donnée présente sur la ligne d'entrée 49 est enregistrée quand un signal S5 fourni à un circuit de commande WR passe au niveau "O".

Le registre permet de mémoriser dans une structure de type PIPELINE la donnée A(Ti-1) représentative de la vitesse lors de la période précédente sur le signal S1.

D'autre part, le circuit de l'invention comporte aussi un circuit 53 qui est un registre analogue aux registres 46 et 47. Le registre 53 comporte une entrée IN connectée directement à la sortie OUT du registre 47. D'autre part, un signal S7 est fourni à l'entrée de commande WR du registre 53 en fonction d'un signal de commande S6 fourni à l'entrée de commande READ du registre 47. Le signal de commande S6 permet dans une première étape de chaque période de transmettre le contenu du registre 47 par une ligne 51 la valeur de la vitesse lors de la période précédente à une première entrée notée A d'un soustracteur 52. D'autre part la sortie OUT du registre 53 est connectée par une ligne 55 à l'entrée notée B du soustracteur 52. Or, le registre 53 contient encore la valeur de la vitesse mesurée lors de l'avant-dernière durée Ti-2 du signal S1. La lecture des signaux OUT des registres 47 et 53 est lue simultanément lors d'une première phase du signal S6 et d'une phase du signal S8.

Le soustracteur 52 réalise la différence entre les contenus des registres 47 et 53 et présente à sa sortie un mot binaire 54 représentatif de la valeur de l'accélération B(t) c'est-à-dire la variation de la vitesse de rotation de l'angle volant c'est-à-dire aussi le mode de réalisation préféré du paramètre de désactivation de l'invention.

A la figure 5 on a représenté le chronogramme de fonctionnement des différents signaux du circuit de la figure 4. On a représenté notamment le signal carré S1, S'1 le signal S2 de détection du front descendant du signal S1, et les impulsions 43 du signal d'horloge 42. On remarque que grâce à l'entrée de synchronisation du circuit 42, chaque impulsion du signal S2 correspond à une impulsion 60 d'horloge 42. Cette disposition permet de recaler l'horloge 42 en fonction du codeur incrémental utilisé.

On a représenté aussi sur la référence 45 la valeur de la sortie OUT du compteur 41 ainsi que les contenus des registres 46,47 et 53. Pendant chaque période ou durée repérée Ti-1, Ti, Ti+1, le mot binaire 45 qui représente A (Ti-1) lors de la durée Ti de S1 ne peut être transféré dans le registre 46 que pendant l'intervalle de temps qui sépare la première impulsion synchronisée 60 de la première impulsion de comptage 61 sur la ligne 43. A cet effet, le signal S3 a lieu pendant cet intervalle et la donnée présente sur la ligne 45 est transférée dans la mémoire 46.

La sortie du registre 46 est un mot binaire 49 qui est exploitable, car constant pendant une grande partie de chaque période séparant les créneaux du signal S1.

Le registre 47 est alors activé par les signaux de commande de lecture S6 et d'écriture S5. Le signal S5 d'écriture est déclenché au niveau actif dès que la donnée sur la ligne 49 est fixe.

Le signal S6 de lecture comporte deux phases notées S6$_2$ et S6$_1$. La phase S6$_1$ du signal S6 permet de réaliser l'opération de soustraction sur la ligne 54. La phase S6$_2$ étant simultanée avec la phase S7 permet le transfert du contenu du registre 47 dans le registre 53.

Les signaux S3 à S8 sont engendrés par un micro-séquenceur activé par le signal S2.

Dans un autre mode de réalisation, le dispositif de la figure 4 est constitué principalement par un microprocesseur doté d'une zone mémoire inscriptible et d'un programme reproduisant les signaux et les fonctionnements précités. D'une manière générale, les trois registres 46,47 et 53 sont en fait constitués par trois adresses mémoire d'une mémoire à lecture et écriture, tandis que le compteur 41 et le soustracteur 52 sont constitués à l'aide du microprocesseur activé par un programme convenable, enregistré dans une mémoire permanente.

Dans un autre mode de réalisation non représenté aux dessins, le dispositif de commande de l'invention comporte aussi un moyen de détection de la proximité des butées de direction des roues directrices. En effet il est souhaitable que la rampe de désactivation du moteur d'assistance soit déclenchée au moins un peu avant l'arrivée à la butée de direction. A cet effet, le capteur 17 comporte aussi un détecteur de butée qui émet un signal de désactivation.

On remarque que selon l'invention, l'accélération B(T) de l'angle volant, n'est prise en compte que pour terminer la phase d'assistance or B(T) est en fait une mesure indirecte du couple. On constate donc que l'invention permet de s'affranchir de la mesure directe et permanente du couple exercé sur la colonne de direction tout en conservant les avantages que procurent la connaissance d'une telle mesure.

## Revendications

1) Dispositif de commande d'un dispositif d'assistance de direction pour un véhicule, l'asservissement pouvant être activé ou désactivé par au moins un signal de commande, caractérisé en qu'il comporte :

– un moyen de mesure (17,26) d'au moins un paramètre d'activation du dispositif (18) d'assistance et un moyen de mesure (27) d'au moins un paramètre de désactivation du dispositif d'assistance,

– un moyen (29) pour réaliser un premier test pour détecter qu'au moins un paramètre d'activation rempli une condition d'activation,

– un moyen (32) d'activation de l'assistance (19) en réponse au premier test,

– un moyen (28) pour réaliser un second test pour détecter qu'au moins un paramètre de désactivation rempli une condition de désactivation, et

– un moyen (33) de désactivation de l'assistance (19) en réponse au second test.

2) Dispositif selon la revendication 1, caractérisé en ce qu'il comporte un moyen (23-25) pour déterminer qu'une condition de mise en service du dispositif de commande est atteinte, telle que, par exemple, la vitesse du véhicule est inférieure à une valeur prédéterminée.

3) Dispositif selon la revendication 1, caractérisé en ce que le moyen de mesure d'au moins un paramètre d'activation et d'au moins un paramètre de désactivation du dispositif d'assistance comporte un capteur (17) d'angle volant solidaire de la colonne de direction.

4) Dispositif selon la revendication 3, caractérisé en ce que le paramètre d'activation est constitué par la vitesse de variation de l'angle volant (A$_{VOL}$).

5) Dispositif selon la revendication 3, caractérisé en ce que le paramètre de désactivation est constitué par la variation de la vitesse de l'angle volant (B$_{VOL}$) c'est-à-dire son accélération.

6) Dispositif selon la revendication 3, caractérisé en ce que le dispositif d'assistance comporte au moins un moteur dont la puissance motrice peut être commandée par un générateur de rampe de puissance motrice croissante (U1) et/ou de puissance motrice décroissante (U2).

7) Dispositif selon la revendication 6, caractérisé en ce que le moyen de test de la condition d'activation engendre un signal de commande fourni au générateur de rampe montante (U1) du dispositif d'assistance, et en ce que le moyen de test de la condition de désativation engendre un signal de commande fourni au générateur de rampe descendante (U2) du dispositif d'assistance.

8) Dispositif selon la revendication 4, caractérisé en ce qu'il comporte un moyen (26) pour générer à chaque instant (Ti) une valeur (Avol) représentative de la vitesse de l'angle volant (A$_{VOL}$) qui comporte un compteur (41) dont la sortie représente le nombre d'impulsions d'une horloge (42) séparant deux impulsions successives engendrées par un codeur incrémental à l'intérieur du capteur (17).

9) Dispositif selon la revendication 8, caractérisé en ce qu'il comporte aussi une mémoire numérique dont une adresse mémorise pendant une durée séparant deux impulsions du signal (S1) issu du capteur (17), la valeur numérique instantanée du paramètre d'activation (Avol) fournie par le compteur (41).

10) Dispositif selon la revendication 9, caractérisé en ce qu'il comporte aussi une adresse de mémoire (47) chargée par la valeur précédente de l'adresse (46) mémorisant le paramètre d'activation, le moyen (52) pour engendrer le paramètre de désactivation comportant aussi une seconde adresse (53) mémorisant la valeur du paramètre d'activation lors d'une période antérieure, les sorties des registres (47 et 53) étant fournies aux entrées de soustraction d'un soustracteur (52), dont la sortie (54) représente la valeur instantanée du paramètre de désactivation.

11) Dispositif selon la revendication 10, caractérisé en ce que les moyens de test comportent un premier comparateur entre le paramètre d'activation et un seuil d'activation et un second comparateur entre le paramètre de désactivation et un second seuil de désactivation.

12) Dispositif selon la revendication 11, caractérisé en ce que le capteur (17) d'angle volant comporte aussi un moyen pour détecter la proximité d'une butée de rotation de la direction, le signal d'activation de ce moyen engendrant un signal de désactivation transmis au générateur de rampe de désactivation (U2).

13) Dispositif selon la revendication 2, caractérisé en ce que le moyen de mise en service comporte un comparateur (24) dont une première entrée reçoit un signal indicatif de la vitesse du véhicule (10) mesurée par un capteur (23), une seconde entrée reçoit un signal d'un circuit de référence (25) et dont la sortie, active si la première entrée est de valeur inférieure à la seconde entrée, est connectée à un moyen d'embrayage et/ou de débrayage (34) du moteur d'assistance (19).

14) Dispositif selon l'une des revendications précédentes, caractérisé en ce qu'il comporte un microprocesseur doté d'une unité d'entrée - sortie, d'une mémoire vive pour mémoriser les paramètres d'activation et de désactivation lors de périodes (Ti) successives et d'une mémoire permanente de programme pré-enregistré.

EP 0 461 037 A1

FIG.1

9

FIG.2

FIG.3

FIG.4

VITESSE A(T)

ACCELERATION
B(T)

SENS DE
ROTATION

EP 0 461 037 A1

FIG.5

EP 0 461 037 A1

**Office européen des brevets**

# RAPPORT DE RECHERCHE EUROPEENNE

Numero de la demande

EP 91 40 1477

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2659437 (STEINBOCK)<br>* page 5, lignes 10 - 31 *<br>* page 9, lignes 4 - 18; figure 3 *<br>--- | 1, 3 | B62D6/00<br>B62D101:00<br>B62D117:00<br>B62D5/04 |
| A | DE-A-2758308 (BOSCH)<br>* page 5, lignes 12 - 26; revendications 1, 2, 5; figure *<br>--- | 1, 2, 3, 13 | |
| A | GB-A-2175551 (HONDA)<br>* abrégé; figure 11 *<br>--- | 4-6, 14 | |
| A | GB-A-2188296 (HONDA)<br>* abrégé; figure 2 *<br>--- | 3, 4, 6, 14 | |
| A | EP-A-0233012 (HITACHI)<br>* abrégé; figure 6 *<br>--- | 3, 5, 6, 14 | |
| A | EP-A-0190678 (HITACHI)<br>* abrégé; figures 6, 7 *<br>----- | 3, 5, 6, 14 | |
| | | | **DOMAINES TECHNIQUES RECHERCHES (Int. Cl.5)**<br><br>B62D |

Le présent rapport a été établi pour toutes les revendications

| Lieu de la recherche | Date d'achèvement de la recherche | Examinateur |
|---|---|---|
| BERLIN | 18 SEPTEMBRE 1991 | KRIEGER, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................
& : membre de la même famille, document correspondant

EPO FORM 1503 03.82 (P0402)

13